# EUROPEAN PATENT APPLICATION

(11) **EP 4 654 684 A1**
(43) Date of publication of application: **26.11.2025**
(21) Application number: 23916670.5
(22) Date of filing: 16.01.2023
(51) Int. Cl.: H04W 64/00

(54) **METHOD FOR DETERMINING AN EXECUTION MODE OR ASSISTING IN DETERMINING AN EXECUTION MODE, APPARATUS, DEVICE AND MEDIUM**

(71) Applicant: Beijing Xiaomi Mobile Software Co., Ltd., Beijing 100085 (CN)
(72) Inventor: SHEN, Yang, Beijing 100085 (CN); GONG, Yubing, Beijing 100085 (CN); WANG, Xinli, Beijing 100085 (CN)
(74) Representative: Dehns Germany Partnerschaft mbB
(86) International application number: PCT/CN2023/072468
(87) International publication number: WO 2024/152179

(57) **Abstract**

Provided in the embodiments of the present disclosure are a method for determining an execution mode or assisting in determining an execution mode, an apparatus, a device and a medium, which are applied to the technical field of wireless communication. The method for determining an execution mode is executed by a UE, and the method comprises: receiving first indication information, the first indication information being used for indicating an execution mode, the execution mode being a mode for executing ranging or sidelink positioning, and the execution mode comprising at least one of the following: a mode limited to the UE and a network-based mode; receiving a ranging or sidelink positioning request; and, according to at least one of the first indication information and the ranging or sidelink positioning request, determining an execution mode.

## Description

### TECHNICAL FIELD

The present disclosure relates to a field of wireless communication technology, and more particularly, to a method for determining or assisting in determining an operation mode, an apparatus, a device, and a medium.

### BACKGROUND

In device-to-device (D2D) communication, a direct communication interface between two user equipment (UEs) with D2D communication function is a PCS interface. Therefore, the D2D communication may also be referred to as PCS communication.

A direct communication link between two terminal devices with D2D communication function is defined as a sidelink (SL). The sidelink may also be referred to as a side link, a PCS link, or a PCS connection.

Ranging refers to determining at least one of the following through the PCS interface: a distance between two or more UEs; a direction from one UE (i.e., a Target UE) to another UE (i.e., a Reference UE); or a relative positioning between one UE (i.e., a Target UE) and another UE (i.e., a Reference UE).

### SUMMARY

The present disclosure provides a method, an apparatus, a device, and a medium for determining or assisting in determining an operation mode.

In a first aspect, a method for determining an operation mode is provided, performed by a User Equipment UE, including:
receiving first indication information, where the first indication information is configured to indicate an operation mode, the operation mode is a mode for performing ranging or sidelink positioning, and the operation mode includes at least one of: a UE-only mode, or a network-based mode;
receiving a ranging or sidelink positioning request; and
determining the operation mode according to at least one of the first indication information or the ranging or sidelink positioning request.

In some possible embodiments, where receiving the first indication information includes: receiving configuration information for the ranging or sidelink positioning sent by a Policy Control Function PCF, where the configuration information includes the first indication information.

In some possible embodiments, where determining the operation mode according to at least one of the first indication information, or the ranging or sidelink positioning request includes:
determining, according to a source of the ranging or sidelink positioning request, that the operation mode is determined according to whether the first indication information or the ranging or sidelink positioning request.

In some possible embodiments, where determining, according to the source of the ranging or sidelink positioning request, that the operation mode is determined according to whether the first indication information or the ranging or sidelink positioning request includes:
the source being an application layer of the UE or a non-application layer of a sidelink positioning client UE, determining the operation mode according to the first indication information.

In some possible embodiments, where determining, according to the source of the ranging or sidelink positioning request, that the operation mode is determined according to whether the first indication information or the ranging or sidelink positioning request includes:
the source of the ranging or sidelink positioning request being an Access and Mobility Management Function AMF or an Access and Location Management Function LMF, and the ranging or sidelink positioning request including second indication information, the second indication information being configured to indicate the operation mode, determining the operation mode according to the ranging or sidelink positioning request.

In some possible embodiments, where determining, according to the source of the ranging or sidelink positioning request, that the operation mode is determined according to whether the first indication information or the ranging or sidelink positioning request includes:
the source of the ranging or sidelink positioning request being an Access and Mobility Management Function AMF or an Access and Location Management Function LMF, and the ranging or sidelink positioning request not including second indication information, determining the operation mode according to the first indication information.

In some possible embodiments, where determining the operation mode according to the ranging or sidelink positioning request includes:
determining that the operation mode is the operation mode indicated by the second indication information in the ranging or sidelink positioning request.

In some possible embodiments, where determining the operation mode according to the first indication information includes: determining that the operation mode is one of operation modes indicated by the first indication information.

In some possible embodiments, where determining that the operation mode is one of the operation modes indicated by the first indication information includes:
when the first indication information indicates the UE-only mode and the network-based mode, determining that the operation mode is one of the UE-only mode and the network-based mode, or determining that the operation mode is the UE-only mode.

In a second aspect, a method for assisting in determining an operation mode is provided, performed by a Policy Control Function PCF, including:
sending first indication information to a User Equipment UE, where the first indication information is configured to indicate an operation mode, the operation mode is a mode for performing ranging or sidelink positioning, and the operation mode includes at least one of: a UE-only mode, or a network-based mode.

In some possible embodiments, the method further includes:
determining that a Location Management Function LMF that has a ranging or sidelink positioning capability is configured, and determining that the operation mode includes at least one of: the UE-only mode or the network-based mode.

In some possible embodiments, the method further includes:
determining that a Location Management Function LMF that has a ranging or sidelink positioning capability is not configured, and determining that an operation mode is the UE-only mode.

In some possible embodiments, the method further includes:
receiving capability indication information sent by at least one of an LMF and an AMF, where the capability indication information is configured to indicate whether the LMF supports the ranging or sidelink positioning capability; and
determining, according to the capability indication information, that an LMF that has a ranging or sidelink positioning capability is configured or an LMF that has a ranging or sidelink positioning capability is not configured.

In a third aspect, an apparatus for determining an operation mode is provided, configured in a User Equipment UE, including:
a transceiver module, configured to receive first indication information, where the first indication information is configured to indicate an operation mode, the operation mode is a mode for performing ranging or sidelink positioning, and the operation mode includes at least one of: a UE-only mode or a network-based mode; and the transceiver module is further configured to receive a ranging or sidelink positioning request;
a processing module, configured to determine an operation mode according to at least one of the first indication information or the ranging or sidelink positioning request.

In a fourth aspect, an apparatus for assisting in determining an operation mode is provided, configured in a Policy Control Function PCF, including:
a transceiver module, configured to send first indication information to a User Equipment, where the first indication information is configured to indicate an operation mode, the operation mode is a mode for performing ranging or sidelink positioning, and the operation mode includes at least one of: a UE-only mode, or a network-based mode.

In a fifth aspect, an electronic device is provided, including a processor and a memory, where
the memory is configured to store a computer program; and
the processor is configured to execute the computer program to implement the method according to the above first aspect or any possibly design of the above first aspect.

In a sixth aspect, an electronic device is provided, including a processor and a memory, where
the memory is configured to store a computer program; and
the processor is configured to execute the computer program to implement the method according to the above second aspect or any possibly design of the above second aspect.

In a seventh aspect, a computer-readable storage medium is provided, where the computer-readable storage medium stores instructions, and when the instructions are executed by a computer, the computer is caused to perform the method according to the above first aspect or any possibly design of the above first aspect.

In an eighth aspect, a computer-readable storage medium is provided, where the computer-readable storage medium stores instructions, and when the instructions are executed by a computer, the computer is caused to perform the method according to the above second aspect or any possibly design of the above second aspect.

In the embodiments of the present disclosure, by receiving the first indication information and taking the first indication information as reference information of a new dimension, operation modes may be determined for ranging or sidelink positioning requests from different sources by referring to information of more dimensions, so as to determine a reasonable operation mode for ranging or sidelink positioning requests from different sources and fully utilize different capabilities of different entities in the network.

### BRIEF DESCRIPTION OF THE DRAWINGS

The drawings described herein are provided for a further understanding of the embodiments of the present disclosure, and constitute a part of the present disclosure. The illustrative embodiments of the present disclosure and their descriptions are used to explain the embodiments of the present disclosure, and do not constitute an undue limitation on the embodiments of the present disclosure.

The drawings herein are incorporated into and constitute a part of the specification, illustrate embodiments consistent with the present disclosure, and are used together with the specification to explain the principles of the embodiments of the present disclosure.
FIG. 1 is a schematic diagram of a wireless communication system architecture provided in an embodiment of the present disclosure;
FIG. 2 is a flowchart of a method for determining an operation mode performed by a UE provided in an embodiment of the present disclosure;
FIG. 3 is a flowchart of another method for determining an operation mode performed by a UE provided in an embodiment of the present disclosure;
FIG. 4 is a flowchart of a method for assisting in determining an operation mode performed by a PCF provided in an embodiment of the present disclosure;
FIG. 5 is a flowchart of another method for assisting in determining an operation mode performed by a PCF provided in an embodiment of the present disclosure;
FIG. 6 is an interaction schematic diagram of a method for determining an operation mode provided in an embodiment of the present disclosure;
FIG. 7 is a structural diagram of an apparatus for determining an operation mode provided in an embodiment of the present disclosure;
FIG. 8 is a structural diagram of another device for determining an operation mode provided in an embodiment of the present disclosure;
FIG. 9 is a structural diagram of an apparatus for assisting in determining an operation mode provided in an embodiment of the present disclosure;
FIG. 10 is a structural diagram of another device for assisting in determining an operation mode provided in an embodiment of the present disclosure.

### DETAILED DESCRIPTION

Embodiments of the present disclosure are further described below with reference to the accompanying drawings and specific embodiments.

Exemplary embodiments are described in detail herein, and the examples are illustrated in the accompanying drawings. When referring to the drawings in the following description, unless otherwise indicated, the same numerals in different drawings refer to the same or similar elements. The embodiments described in the following exemplary embodiments do not represent all embodiments consistent with the present disclosure. On the contrary, they are merely examples of devices and methods consistent with some aspects of the present disclosure as detailed in the appended claims.

The terminology used in the embodiments of the present disclosure is for the purpose of describing particular embodiments only, and is not intended to limit the embodiments of the present disclosure. As used in the present disclosure and the appended claims, the singular forms "a" and "the" are intended to include the plural forms as well, unless the context clearly indicates otherwise. It should also be understood that the term "and/or" as used herein refers to and includes any and all possible combinations of one or more of the associated listed items.

It should be understood that although the terms first, second, third, etc., may be used to describe various information in the embodiments of the present disclosure, such information should not be limited by these terms. These terms are used merely to distinguish information of the same type. For example, without departing from the scope of the present disclosure, first indication information may also be referred to as second indication information, and likewise, second indication information may also be referred to as first indication information. Depending on the context, words such as "if" and "when" used herein may be interpreted as "in the case that," "upon," or "in response to a determination that."

The embodiments of the present disclosure are described in detail below. The exemplary embodiments are shown in the accompanying drawings, in which the same or similar reference numerals throughout refer to the same or similar elements. The embodiments described below with reference to the drawings are exemplary and are intended to explain the present disclosure, and should not be construed as limiting the present disclosure.

The technical solutions of the embodiments of the present disclosure may be applied to a 5th Generation (5G) system or a New Radio (NR) communication system, and may also be applied to other communication systems that may emerge in the future, such as a 6G communication system.

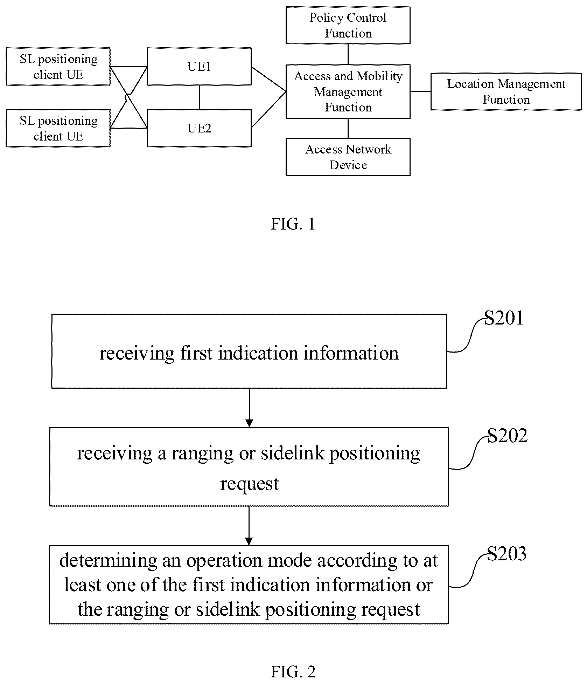

As shown in FIG. 1, the method provided in the embodiments of the present disclosure may be applied to a wireless communication system 100. The wireless communication system 100 includes the following network elements:
(1) Access Network Device: the UE is wirelessly connected to a Radio Access Network (RAN) device (referred to as an "access network device" in the present disclosure). The access network device may be an access device through which the terminal device wirelessly accesses the mobile communication system, and may be a base station (for example, a base station (gNodeB, gNB) in a 5G mobile communication system), a base station in a future mobile communication system, or an access node in a Wireless Fidelity (WiFi) system, it may also be a wireless controller in a Cloud Radio Access Network (CRAN) scenario, or the access network device may be a relay station, an access point, a vehicle-mounted device, a wearable device, or a network device in a future 5G network or a network device in a future evolved Public Land Mobile Network PLMN, and the like. The embodiments of the present disclosure do not limit the specific technology or specific device form adopted by the access network device.
(2) Access and Mobility Management Function (AMF): mainly used for allocating a proximity service discovery parameter. The AMF may be used for access and mobility management.
(3) Policy Control Function (PCF): used for managing a behavior of a network and providing policies and rules for a control plane.
(4) Location Management Function (LMF): mainly used for UE positioning.
(5) User Equipment (UE): may refer to an access terminal, a terminal in V2X communication, a user unit, a user station, a mobile station, a mobile terminal, a remote station, a remote terminal, a mobile device, a user terminal, a terminal device, a wireless communication device, a user agent, or a user apparatus. The UE may also be a cellular phone, a cordless phone, a Session Initiation Protocol (SIP) phone, a Wireless Local Loop (WLL) station, a Personal Digital Assistant (PDA), a handheld device with wireless communication function, a computing device or other processing device connected to a wireless modem, an in-vehicle device, a wearable device, a UE in a future 5G network, or a UE in a future evolved Public Land Mobile Network (PLMN). The embodiments of the present disclosure are not limited thereto.
(6) SL positioning client UE: initiates a ranging/sidelink positioning request to a UE.
(7) SL positioning server UE: determines a ranging/SL positioning method, distributes auxiliary data, selects an SL reference UE/positioning UE, and calculates the position of the target UE.

In some possible embodiments, the operation mode may be a Network-based mode (Network-based Operation), and the naming is not limited herein. In some possible embodiments, the operation mode may be a UE-Only mode (UE-Only Operation), the UE-only mode may also be referred to as a UE-based mode (UE- based Operation), and the like, and the naming is not limited thereto. In addition, other operation modes may also be possible. The UE may determine a positioning result using the operation mode indicated by the indication information and report the positioning result to the AMF.

Optionally, when calculating the positioning result using the UE-only mode, in order to better complete the calculation, at least one sidelink positioning server UE may be discovered and selected, and the calculation may be assisted using the at least one sidelink positioning server UE.

Optionally, when a positioning result is calculated using a network-based mode, since some LMFs have the ranging or sidelink positioning capability and other LMFs do not have the capability to perform ranging or sidelink positioning, in the case where there are a plurality of LMFs, it is necessary for the AMF to select, from the plurality of LMFs, an LMF that has the ranging or sidelink positioning capability, and the calculation is done by the selected LMF to obtain the positioning result. The LMF may further send the positioning result to the AMF. When there is only one LMF that has the ranging or sidelink positioning capability, the AMF directly selects that LMF. When there is only one LMF which does not have the ranging or sidelink positioning capability, the calculation of the network-based mode cannot be completed.

Embodiments of the present disclosure provide a method for determining an operation mode, performed by a UE. FIG. 2 is a flowchart of a method for determining an operation mode performed by a UE shown according to an exemplary embodiment. As shown in FIG. 2, the method includes:
S201, first indication information is received.

The first indication information is configured to indicate an operation mode, the operation mode is a mode for performing ranging or sidelink positioning. The operation mode includes at least one of: a UE-Only Operation mode or a Network-based Operation mode.

In some possible embodiments, configuration information for the ranging or sidelink positioning sent by the PCF may be received, where the configuration information includes the first indication information.

Optionally, the configuration information is configuration information sent by the PCF to the UE during an authorization and policy or parameter configuration phase, and the first indication information is newly added information in the configuration information.

S202, a ranging or sidelink positioning request is received.

The received ranging or sidelink positioning request may originate from different sources.

In some possible embodiments, the source of the ranging or sidelink positioning request is an application layer of the UE.

In one case, the UE application layer is the application layer of the UE. The ranging or sidelink positioning request is generated by the application layer of the UE, or is generated by another UE and then sent to the application layer of the UE.

In some possible embodiments, the source of the ranging or sidelink positioning request is a non-application layer of a sidelink positioning client UE, the ranging or sidelink positioning request is sent to the UE by the sidelink positioning client UE via a non-application layer, the non-application layer being lower than the application layer. For example, the non-application layer may be a V2X/ProSe layer.

In some possible embodiments, the source of the ranging or sidelink positioning request is the AMF, and the ranging or sidelink positioning request is sent by the AMF to the current UE.

In some possible embodiments, the source of the ranging or sidelink positioning request is the LMF, and the ranging or sidelink positioning request is sent by the LMF to the current UE. In one example, when the source of the ranging or sidelink positioning request is the LMF, the UE receives an LPP (LTE Positioning Protocol) message, where the LPP message includes the ranging or sidelink positioning request.

S203, an operation mode is determined according to at least one of the first indication information or the ranging or sidelink positioning request.

In some possible embodiments, determining the operation mode according to at least one of the first indication information or the ranging or sidelink positioning request includes at least one of the following:
Method 1: when the source of the ranging or sidelink positioning request is an application layer of the UE, the operation mode is determined according to the first indication information.
Method 2: when the source of the ranging or sidelink positioning request is the non-application layer of the sidelink positioning client UE, the operation mode is determined according to the first indication information.
Method 3: when the source of the ranging or sidelink positioning request is the AMF, and the ranging or sidelink positioning request includes second indication information, the operation mode is determined according to the ranging or sidelink positioning request; when the ranging or sidelink positioning request does not include second indication information, the operation mode is determined according to the first indication information. The second indication information is configured to indicate an operation mode.
Method 4: when the source of the ranging or sidelink positioning request is the LMF, and the ranging or sidelink positioning request includes second indication information, the operation mode is determined according to the ranging or sidelink positioning request; when the ranging or sidelink positioning request does not include second indication information, the operation mode is determined according to the first indication information. The second indication information is configured to indicate an operation mode.

Optionally, in Method 1, Method 2, Method 3, and Method 4, the determining an operation mode according to the first indication information includes: determining that the operation mode is one of the operation modes indicated by the first indication information.

In some possible embodiments, the operation mode is determined as one of the operation modes indicated by the first indication information, which includes at least one of the following:
when the first indication information indicates the UE-only mode and does not indicate the network-based mode, it is determined that the operation mode is the UE-only mode.

When the first indication information indicates the network-based mode and does not indicate the UE-only mode, it is determined that the operation mode is the network-based mode.

When the first indication information indicates both the UE-only mode and the network-based mode, the operation mode may be determined to be one of the two operation modes, or may be determined to be the UE-only mode. When the operation mode is determined to be one of the two operation modes, the operation mode may be determined as either of the two operation modes, or one may be selected from one of the two operation modes according to a preset selection policy.

Optionally, in Method 3 and Method 4, the determining the operation mode according to the ranging or sidelink positioning request includes: determining that the operation mode is the operation mode indicated by the second indication information in the ranging or sidelink positioning request.

In some possible embodiments, the execution sequence of S201 and S202 may be interchanged.

Optionally, when S201 is performed before S202, the UE receives the first indication information during the authorization and policy or parameter configuration phase, and after the end of the authorization and policy or parameter configuration phase, receives the ranging or sidelink positioning request.

Optionally, when S202 is performed before S201, after receiving the ranging or sidelink positioning request, the UE sends a request for acquiring the first indication information and receives the first indication information.

Any step in the present embodiment may be combined with any optional example or optional embodiment corresponding to any embodiment described above.

In the embodiments of the present disclosure, by receiving the first indication information and taking the first indication information as reference information of a new dimension, operation modes may be determined for ranging or sidelink positioning requests from different sources by referring to information of more dimensions, so as to determine a reasonable operation mode for ranging or sidelink positioning requests from different sources and fully utilize different capabilities of different entities in the network.

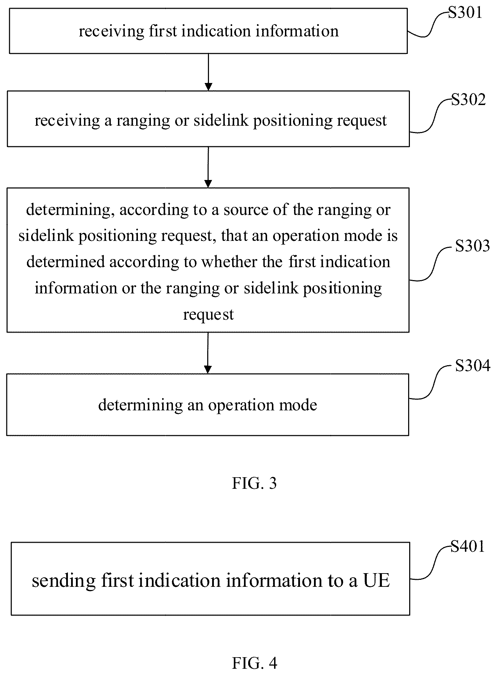

The embodiments of the present disclosure provide a method for determining an operation mode, performed by a UE. FIG. 3 is a flowchart illustrating a method for determining an operation mode, performed by a UE, according to an exemplary embodiment. As shown in FIG. 3, the method includes:
S301: first indication information is received.

The content in S301 is the same as the content in S201. Refer to the content of S201, which will not be repeated here.

S302: a ranging or sidelink positioning request is received.

The content in S302 is the same as the content in S202. Refer to the content of S202, which will not be repeated here.

S303: according to a source of the ranging or sidelink positioning request, it is determined that an operation mode is determined according to whether the first indication information or the ranging or sidelink positioning request.

Optionally, the determining that the operation mode is determined according to whether the first indication information or the ranging or sidelink positioning request according to the source of the ranging or sidelink positioning request includes at least one of the following:
Method (1): when the source of the ranging or sidelink positioning request is an application layer of the UE, the operation mode is determined according to the first indication information.
Method (2): when the source of the ranging or sidelink positioning request is a non-application layer of a sidelink positioning client UE, the operation mode is determined according to the first indication information.
Method (3): when the source of the ranging or sidelink positioning request is the AMF, and the ranging or sidelink positioning request includes second indication information, the operation mode is determined according to the ranging or sidelink positioning request; when the ranging or sidelink positioning request does not include second indication information, the operation mode is determined according to the first indication information. The second indication information is configured to indicate an operation mode.
Method (4): when the source of the ranging or sidelink positioning request is the LMF, and the ranging or sidelink positioning request includes second indication information, the operation mode is determined according to the ranging or sidelink positioning request; when the ranging or sidelink positioning request does not include the second indication information, the operation mode is determined according to the first indication information. The second indication information is configured to indicate an operation mode.

In an optional example, a mapping relationship is preconfigured in the UE, and the mapping relationship includes at least one of the following:
first relationship: the application layer of the UE corresponding to the first indication information;
second relationship: a non-application layer of a sidelink positioning client UE corresponding to the first indication information;
third relationship: the AMF corresponding to the ranging or sidelink positioning request;
fourth relationship: the LMF corresponding to the ranging or sidelink positioning request;

After determining the source of the ranging or sidelink positioning request, the UE may query the mapping relationship according to the source, so as to determine that an operation mode is determined according to whether the first indication information or the ranging or sidelink positioning request.

S304: an operation mode is determined.

An operation mode is determined according to the result determined in S303.

When it is determined in S303 that the operation mode is determined according to the first indication information, the determining the operation mode according to the first indication information includes: determining that the operation mode is one of the operation modes indicated by the first indication information.

The specific method for determining that the operation mode is one of the operation modes indicated by the first indication information here is the same as the method for determining that the operation mode is one of the operation modes indicated by the first indication information in Method 1, Method 2, Method 3, and Method 4, and is not repeated here.

When it is determined in S303 that the operation mode is determined according to the ranging or sidelink positioning request, the method for determining the operation mode according to the ranging or sidelink positioning request is the same as the method for determining the operation mode according to the ranging or sidelink positioning request in Method 3 and Method 4, and is not repeated here.

In some possible embodiments, the execution sequence of S301 and S302 may be interchanged. Optional embodiments corresponding to different execution sequences of S301 and S302 may refer to the above optional embodiments corresponding to the different execution sequences of S301 and S302.

Any step in the present embodiment may be combined with any optional example or optional embodiment corresponding to any embodiment described above.

In the embodiments of the present disclosure, considering that the UE may receive ranging or sidelink positioning requests from different sources, by receiving the first indication information and taking the first indication information as reference information of a new dimension, an operation mode may be determined for ranging or sidelink positioning requests from different sources by referring to information of more dimensions. Moreover, according to the source of the ranging or sidelink positioning request, it may be determined that the operation mode is determined according to whether the first indication information or the ranging or sidelink positioning request, so as to determine a reasonable operation mode for the ranging or sidelink positioning requests from different sources, and to fully utilize the different capabilities of different entities in the network.

The embodiments of the present disclosure provide a method for assisting in determining an operation mode, performed by a PCF. FIG. 4 is a flowchart illustrating a method for assisting in determining an operation mode, performed by a PCF, according to an exemplary embodiment. As shown in FIG. 4, the method includes:
S401: first indication information is sent to a UE.

The first indication information is configured to indicate an operation mode, where the operation mode is a mode for performing ranging or sidelink positioning, and includes at least one of: a UE-only mode, or a network-based mode.

In some possible embodiments, when it is determined that an LMF that has the ranging or sidelink positioning capability is configured, it is determined that the operation mode indicated by the first indication information includes at least one of: the UE-only mode or the network-based mode.

In some possible embodiments, when it is determined that an LMF that has the ranging or sidelink positioning capability is not configured, it is determined that the operation mode is the UE-only mode.

Any step in this embodiment may be combined with any optional example or optional embodiment corresponding to any embodiment described above.

In the embodiments of the present disclosure, the first indication information is sent to the UE, which helps the UE may have more dimensional information to refer to when determining the operation mode for the ranging or sidelink positioning request, so as to determine a more reasonable operation mode and fully utilize different capabilities of different entities in the network.

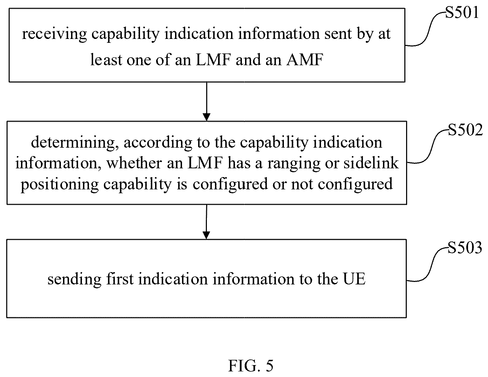

The embodiments of the present disclosure provide a method for assisting in determining an operation mode, performed by a PCF. FIG. 5 is a flowchart illustrating a method for assisting in determining an operation mode, performed by a PCF, according to an exemplary embodiment. As shown in FIG. 5, the method includes:
S501: capability indication information sent by at least one of an LMF and an AMF is received, where the capability indication information is configured to indicate whether the LMF supports a ranging or sidelink positioning capability.
S502: it is determined, according to the capability indication information, whether an LMF that has a ranging or sidelink positioning capability is configured or not configured.
S503: first indication information is sent to the UE.

When it is determined in S502 that the LMF that has the ranging or sidelink positioning capability is configured, the first indication information is sent to the UE, where the operation mode indicated by the first indication information includes at least one of: a UE-only mode, or a network-based mode.

When it is determined in S502 that an LMF that has the ranging or sidelink positioning capability is not configured, the first indication information is sent to the UE, where the operation mode indicated by the first indication information is the UE-only mode.

Any step in this embodiment may be combined with any optional example or optional embodiment corresponding to any embodiment described above.

In the embodiments of the present disclosure, a more reasonable operation mode is determined according to capability indication information received from at least one of the LMF and AMF, and the reasonable operation mode is recommended to the UE by sending the first indication information to the UE, such that the UE may have more dimensions of information to be referred to when determining the operation mode for the ranging or sidelink positioning request, thereby determining a more reasonable operation mode and fully utilizing different capabilities of different entities in the network.

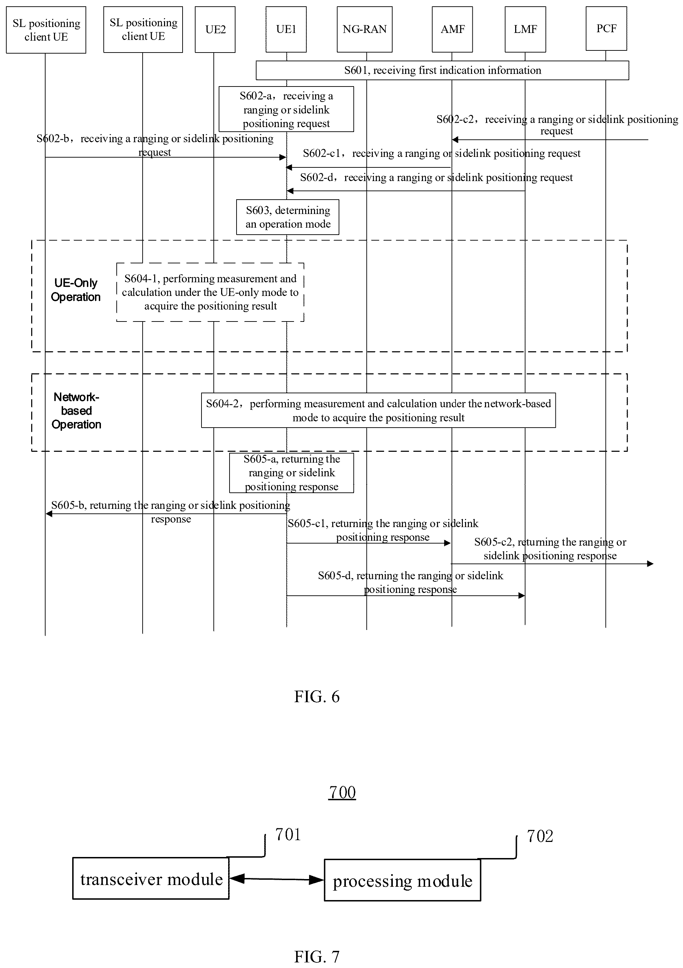

The embodiments of the present disclosure provide a method for determining an operation mode. FIG. 6 is a flowchart illustrating a method for determining an operation mode according to an exemplary embodiment. As shown in FIG. 6, the method includes:
S601: the PCF sends first indication information to UE1.

In some possible embodiments, the PCF sends configuration information to UE1, where the configuration information includes the first indication information configured to indicate an operation mode, and the operation mode is a mode for performing ranging or sidelink positioning, and the operation mode includes at least one of: a UE-only mode, or a network-based mode.

In some possible embodiments, the configuration information for ranging or sidelink positioning sent by the PCF to UE1 includes the first indication information.

Optionally, the configuration information is configuration information sent by the PCF to the UE during an authorization and policy or parameter configuration phase, and the first indication information is newly added information in the configuration information.

Optionally, the first indication information may be indicated by a newly added parameter in the configuration information.

In some possible embodiments, the first indication information may be pre-configured in UE1, and thus the method may not include S601, i.e., the PCF does not need to send the first indication information to UE1, and UE1 may directly acquire the pre-configured first indication information.

In some possible embodiments, the first indication information is configured to indicate an operation mode, where the operation mode is a mode for performing the ranging or sidelink positioning, and includes at least one of: a UE-only mode, or a network-based mode.

In some possible embodiments, when the PCF determines that the LMF that has the ranging or sidelink positioning capability is configured, it is determined that the operation mode indicated by the first indication information includes at least one of: the UE-only mode or the network-based mode.

In some possible embodiments, when the PCF determines that the LMF that has the ranging or sidelink positioning capability is not configured, it is determined that the operation mode is the UE-only mode.

S602: UE1 receives a ranging or sidelink positioning request.

The ranging or sidelink positioning request received by UE1 may originate from different sources.

Optionally, as shown in S602-a, the source of the ranging or sidelink positioning request is the application layer of UE1.

In one case, the UE application layer refers to the application layer of UE, and the ranging or sidelink positioning request is generated by the application layer of UE or is generated by another UE and sent to the application layer of the UE.

Optionally, as shown in S602-b, the source of the ranging or sidelink positioning request is the non-application layer of a sidelink positioning client UE, and the ranging or sidelink positioning request is sent from the sidelink positioning client UE to the UE via a non-application layer, the non-application layer is lower than the application layer, for example, the non-application layer is a V2X/ProSe layer.

Optionally, as shown in S602-c1, the source of the ranging or sidelink positioning request is the AMF, and the ranging or sidelink positioning request is sent by the AMF to the current UE. As shown in S602-c2, the AMF receives the ranging or sidelink positioning request from another network function.

Optionally, as shown in S602-d, the source of the ranging or sidelink positioning request is the LMF, and the ranging or sidelink positioning request is sent by the LMF to the current UE. In one example, when the source of the ranging or sidelink positioning request is the LMF, the UE receives an LPP (LTE Positioning Protocol) message, and the ranging or sidelink positioning request is included in the LPP message.

S603: UE1 determines an operation mode according to at least one of the first indication information or the ranging or sidelink positioning request. When the determined operation mode is the UE-only mode, proceed to S604-1. When the determined operation mode is the network-based mode, proceed to S604-2.

Optionally, if the source of the ranging or sidelink positioning request is the application layer of UE1, UE1 determines an operation mode based on the first indication information.

In one example, the operation mode is determined as one of the operation modes indicated by the first indication information.

Optionally, if the source of the ranging or sidelink positioning request is the non-application layer of a sidelink positioning client UE, UE1 determines an operation mode based on the first indication information.

In one example, the operation mode is determined as one of the operation modes indicated by the first indication information.

Optionally, if the source of the ranging or sidelink positioning request is the AMF, an operation mode is determined based on the first indication information and the ranging or sidelink positioning request.

In one example, the ranging or sidelink positioning request has a higher priority than the first indication information. When the ranging or sidelink positioning request includes second indication information, and the second indication information is configured to indicate an operation mode, the operation mode is determined as the operation mode indicated by the second indication information; when the ranging or sidelink positioning request does not include the second indication information, the operation mode is determined as one of the operation modes indicated by the first indication information.

Optionally, if the source of the ranging or sidelink positioning request is the LMF, an operation mode is determined based on the first indication information and the ranging or sidelink positioning request.

Optionally, UE1 receives an LPP message, and the ranging or sidelink positioning request is included in the LPP message.

In one example, the ranging or sidelink positioning request has a higher priority than the first indication information. When the ranging or sidelink positioning request includes second indication information, and the second indication information is used to indicate an operation mode, the operation mode is determined as the operation mode indicated by the second indication information; when the ranging or sidelink positioning request does not include the second indication information, the operation mode is determined as one of the operation modes indicated by the first indication information.

S604-1: the measurement and calculation is performed under the UE-only mode to acquire the positioning result.

Optionally, UE1 may discover and select at least one sidelink positioning server UE, and use the at least one sidelink positioning server UE to assist in completing the calculation.

Optionally, UE1 may select at least one sidelink positioning server UE according to the capabilities of different sidelink positioning server UEs, where the capability include at least one of: an identification, distance from UE1, and signal strength for communication with UE1.

Optionally, the measurement and calculation are performed among UE1, UE2, and the at least one sidelink positioning server UE so as to obtain the positioning result.

S604-2: measurement and calculation are performed under the network-based mode to acquire the positioning result.

Optionally, when there are a plurality of LMFs, the AMF selects an LMF that has the ranging or sidelink positioning capability from the plurality of LMFs. When there is only one LMF that has the ranging or sidelink positioning capability, the AMF directly selects the LMF.

Optionally, the measurement and calculation are performed among UE1, UE2, and the LMF to acquire the positioning result.

S605: UE1 returns a ranging or sidelink positioning response, where the ranging or sidelink positioning response includes the positioning result.

Optionally, corresponding to S602-a where the source of the ranging or sidelink positioning request is the application layer of the UE, in S605-a, the ranging or sidelink positioning response is returned to the application layer of the UE.

Optionally, corresponding to S602-b where the source of the ranging or sidelink positioning request is the non-application layer of the sidelink positioning client UE, in S605-b, the ranging or sidelink positioning response is returned to the sidelink positioning client UE.

Optionally, corresponding to S602-c1 where the source of the ranging or sidelink positioning request is the AMF, in S605-c, the ranging or sidelink positioning response is returned to the AMF. Corresponding to S602-c2, the AMF returns the ranging or sidelink positioning response to another network function.

Optionally, corresponding to S602-d where the source of the ranging or sidelink positioning request is the LMF, in S605-d, the ranging or sidelink positioning response is returned to the LMF.

In this embodiment of the present disclosure, the execution sequences of S601 and S602 may be interchanged.

In this embodiment of the present disclosure, any step may serve as an independent embodiment, and any combination of steps (i.e., deleting some steps) may also serve as an independent embodiment, and the order of steps may be interchanged where not contradictory. Any step in this embodiment may be combined with any optional example or optional embodiment corresponding to any embodiment in all of the above embodiments.

Based on the same concept as the method embodiments above, the present disclosure further provides a communication apparatus, which may have the functions of the UE in the above method embodiments and is used to perform the steps executed by the UE as provided in the above embodiments. The function may be implemented by hardware, or by software or hardware executing corresponding software. The hardware or software includes one or more modules corresponding to the above functions.

In a possible embodiment, the communication device 700 shown in FIG. 7 may serve as the UE involved in the above-described method embodiments, and execute the steps performed by the UE in one of the method embodiments described above.
The communication apparatus 700 includes a transceiver module 701 and a processing module 702.
The transceiver module 701 is configured to receive first indication information, where the first indication information is configured to indicate an operation mode, the operation mode being a mode for performing ranging or sidelink positioning, and the operation mode including at least one of the following: a UE-only mode, and a network-based mode;
The transceiver module 701 is further configured to receive a ranging or sidelink positioning request;
The processing module 702 is configured to determine an operation mode according to at least one of the first indication information or the ranging or sidelink positioning request.

In a possible embodiment, the transceiver module 701 is further configured to receive configuration information for the ranging or sidelink positioning sent by a Policy Control Function PCF, where the configuration information includes the first indication information.

In a possible embodiment, the processing module 702 is further configured to determine, according to a source of the ranging or sidelink positioning request, that an operation mode is determined according to whether the first indication information or the ranging or sidelink positioning request.

In a possible embodiment, the processing module 702 is further configured to determine, when the source is an application layer of the user equipment or a non-application layer of a sidelink positioning client user equipment, an operation mode according to the first indication information.

In a possible embodiment, the processing module 702 is further configured to determine, when the source of the ranging or sidelink positioning request is AMF or LMF, and the ranging or sidelink positioning request includes second indication information, where the second indication information is configured to indicate an operation mode, an operation mode is determined according to the ranging or sidelink positioning request.

In a possible embodiment, the processing module 702 is further configured to determine, when the source of the ranging or sidelink positioning request is an Access and Mobility Management Function AMF or a Location Management Function LMF, and the ranging or sidelink positioning request does not include the second indication information, an operation mode is determined according to the first indication information.

In a possible embodiment, the processing module 702 is further configured to determine the operation mode as the operation mode indicated by the second indication information in the ranging or sidelink positioning request.

In a possible embodiment, the processing module 702 is further configured to determine the operation mode as one of the operation modes indicated by the first indication information.

In a possible embodiment, the processing module 702 is further configured to determine, when the first indication information indicates both the UE-only mode and the network-based mode, the operation mode as either one of the UE-only mode and the network-based mode, or to determine the operation mode as the UE-only mode.

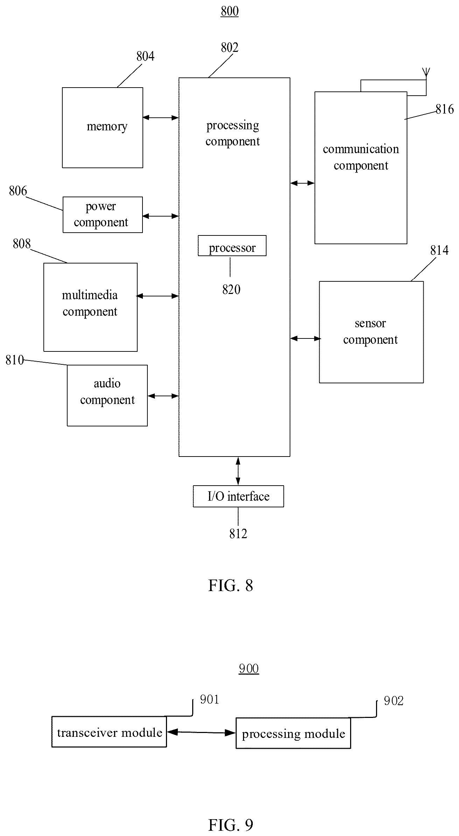

If the communication apparatus is the user equipment 102, its structure may also be as shown in FIG. 8. FIG. 8 is a schematic diagram of an apparatus 800 illustrated according to an exemplary embodiment. For example, the apparatus 800 may be a mobile phone, a computer, a digital broadcasting terminal, a message transceiver device, a game console, a tablet device, a medical device, a fitness device and a personal digital assistant, etc.

As illustrated in FIG. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communication, camera operations, and recording operations. The processing component 802 may include one or more processors 820 to perform instructions to implement all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the apparatus 800. Examples of such data include instructions for any application programs or methods operated on the apparatus 800, contact data, phonebook data, messages, pictures, videos, etc. The memory 804 may be implemented using any type of volatile or nonvolatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power for the apparatus 800.

The multimedia component 808 includes a screen providing an output interface between the apparatus 800 and a user. In some embodiments, the screen may include a Liquid Crystal Display (LCD) and a Touch Panel (TP). If the screen includes the TP, the screen may be implemented as a touch screen to receive input signals from the user. The TP includes one or more touch sensors to sense touches, slides, and gestures on the touch panel. The touch sensors may not only sense a boundary of the touch or the slide action, but also sense a wake-up time and a pressure associated with the touch or slide action. In some embodiments, the multimedia component 808 includes a front-facing camera and/or a rear-facing camera. When the apparatus 800 is in an operating mode, such as a shooting mode or a video mode, the front-facing camera and/or the rear-facing camera may receive external multimedia data. Each front-facing camera and rear-facing camera may be a fixed optical lens system or has a focal length and an optical zoom capability.

The audio component 810 is configured to output and/or input audio signals. For example, the audio component 810 includes a microphone (MIC) configured to receive an external audio signal when the apparatus 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, the peripheral interface module may be a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an on/off status of the apparatus 800, relative positioning of components, e.g., the display and the keypad, of the apparatus 800, a change in position of the apparatus 800 or a component of the apparatus 800, a presence or absence of a user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include an optical sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 may access a wireless network based on a communication standard, such as WiFi, 4G, or 5G, or a combination thereof. In an exemplary embodiment, the communication component 816 receives a broadcast signal or broadcast associated information from an external broadcast management system via a broadcast channel. In an exemplary embodiment, the communication component 816 further includes a Near Field Communication (NFC) module to facilitate short-range communication. For example, the NFC module may be implemented based on a radio-frequency identification (RFID) technology, an Infrared Data Association (IrDA) technology, an Ultra-Wide Band (UWB) technology, a Blue Tooth (BT) technology, and other technologies.

In an exemplary embodiment, the apparatus 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In an exemplary embodiment, there is also provided a non-transitory computer readable storage medium including instructions, such as the memory 804, executable by the processor 820 in the apparatus 800, for implementing the above method. For example, the non-transitory computer-readable storage medium may be a ROM, a Random Access Memory (RAM), a CD-ROM, a magnetic tape, a floppy disc, and an optical data storage device, etc.

Based on the same concept as the above method embodiments, the present disclosure also provides a communication apparatus that may possess the functionality of the PCF in the above method embodiments and be configured to perform the steps executed by the PCF as provided in the above embodiments. This functionality may be implemented via hardware, or via software executed by hardware. This hardware or software includes one or more modules corresponding to the aforementioned functionality.

In one possible embodiment, the communication apparatus 900 shown in FIG. 9 may serve as the PCF involved in the above method embodiments and perform the steps executed by the PCF as described in one of the method embodiments above.

The communication apparatus 900 includes a transceiver module 901 and a processing module 902.

The transceiver module 901 is configured to send first indication information to a User Equipment UE, where the first indication information is configured to indicate an operation mode. The operation mode is a mode for performing ranging or sidelink positioning and includes at least one of the following: a UE-only mode, or a network-based mode.

In one possible embodiment, the processing module 902 is configured to determine that an LMF that has a ranging or sidelink positioning capability is configured, and determine that the operation mode includes at least one of the following: the UE-only mode or the network-based mode.

In one possible embodiment, the processing module 902 is further configured to determine that a Location Management Function LMF that has the ranging or sidelink positioning capability is not configured, and determine that the operation mode is the UE-Only mode.

In one possible embodiment, the processing module 902 is further configured to receive capability indication information sent by at least one of the LMF and AMF, where the capability indication information is configured to indicate whether the LMF supports the ranging or sidelink positioning capability; and is further configured to determine, according to the capability indication information, whether an LMF that has the ranging or sidelink positioning capability is configured or not configured.

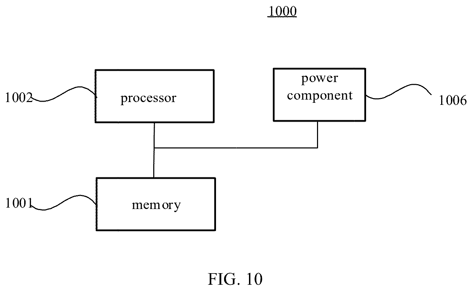

When the communication apparatus is the PCF, its structure may also be as shown in FIG. 10. As illustrated in FIG. 10, the apparatus 1000 includes a memory 1001, a processor 1002, and a power component 1006. The memory 1001 is coupled with the processor 1002 and may be used to store the programs and data necessary for implementing various functions of the communication apparatus 1000. The processor 1002 is configured to support the communication apparatus 1000 in performing the corresponding functions of the aforementioned methods, and such functions may be achieved by invoking programs stored in the memory 1001.

It will be readily apparent to those skilled in the art, after considering the specification and practicing the present disclosure, that other implementations of the embodiments of the present disclosure may be conceived. The present disclosure is intended to cover any variations, uses, or adaptive changes of the embodiments of the present disclosure that follow the general principles of the embodiments of the present disclosure and include common knowledge or customary techniques in the field not explicitly disclosed herein. The specification and the embodiments are to be considered as illustrative only, and the true scope and spirit of the embodiments of the present disclosure are defined by the following claims.

It should be understood that the embodiments of the present disclosure are not limited to the precise structures described above and shown in the accompanying drawings, and various modifications and changes may be made without departing from the scope thereof. The scope of the embodiments of the present disclosure is defined only by the appended claims.

### Industrial Applicability

By receiving the first indication information and taking the first indication information as a new dimension of reference information, more dimensions of information may be taken into account to determine an operation mode for ranging or sidelink positioning requests from different sources, so as to determine a reasonable operation mode for the ranging or sidelink positioning requests from different sources, allowing for full utilization of the different capabilities of different entities within the network.

## Claims

1. A method for determining an operation mode, performed by a User Equipment UE, comprising:
receiving first indication information, wherein the first indication information is configured to indicate an operation mode, the operation mode is a mode for performing ranging or sidelink positioning, and the operation mode comprises at least one of: a UE-only mode, or a network-based mode;
receiving a ranging or sidelink positioning request; and
determining the operation mode according to at least one of the first indication information or the ranging or sidelink positioning request.

2. The method according to claim 1, wherein receiving the first indication information comprises:
receiving configuration information for the ranging or sidelink positioning sent by a Policy Control Function PCF, wherein the configuration information comprises the first indication information.

3. The method according to any one of claims 1 to 2, wherein determining the operation mode according to at least one of the first indication information, or the ranging or sidelink positioning request comprises:
determining, according to a source of the ranging or sidelink positioning request, that the operation mode is determined according to whether the first indication information or the ranging or sidelink positioning request.

4. The method according to claim 3, wherein determining, according to the source of the ranging or sidelink positioning request, that the operation mode is determined according to whether the first indication information or the ranging or sidelink positioning request comprises:
the source being an application layer of the UE or a non-application layer of a sidelink positioning client UE, determining the operation mode according to the first indication information.

5. The method according to claim 3 or 4, wherein determining, according to the source of the ranging or sidelink positioning request, that the operation mode is determined according to whether the first indication information or the ranging or sidelink positioning request comprises:
the source of the ranging or sidelink positioning request being an Access and Mobility Management Function AMF or an Access and Location Management Function LMF, and the ranging or sidelink positioning request comprising second indication information, the second indication information being configured to indicate the operation mode, determining the operation mode according to the ranging or sidelink positioning request.

6. The method according to claim 3 or 4, wherein determining, according to the source of the ranging or sidelink positioning request, that the operation mode is determined according to whether the first indication information or the ranging or sidelink positioning request comprises:
the source of the ranging or sidelink positioning request being an Access and Mobility Management Function, AMF or an Access and Location Management Function, LMF, and the ranging or sidelink positioning request not comprising second indication information, determining the operation mode according to the first indication information.

7. The method according to claim 5, wherein determining the operation mode according to the ranging or sidelink positioning request comprises:
determining that the operation mode is the operation mode indicated by the second indication information in the ranging or sidelink positioning request.

8. The method according to claim 4 or 6, wherein determining the operation mode according to the first indication information comprises:
determining that the operation mode is one of operation modes indicated by the first indication information.

9. The method according to claim 8, wherein determining that the operation mode is one of the operation modes indicated by the first indication information comprises:
when the first indication information indicates the UE-only mode and the network-based mode, determining that the operation mode is one of the UE-only mode and the network-based mode, or determining that the operation mode is the UE-only mode.

10. A method for assisting in determining an operation mode, performed by a Policy Control Function PCF, comprising:
sending first indication information to a User Equipment UE, wherein the first indication information is configured to indicate an operation mode, the operation mode is a mode for performing ranging or sidelink positioning, and the operation mode comprises at least one of: a UE-only mode, or a network-based mode.

11. The method according to claim 10, further comprising:
determining that a Location Management Function LMF that has a ranging or sidelink positioning capability is configured, and determining that the operation mode comprises at least one of: the UE-only mode or the network-based mode.

12. The method according to claim 10 or 11, further comprising:
determining that a Location Management Function LMF that has a ranging or sidelink positioning capability is not configured, and determining that an operation mode is the UE-only mode.

13. The method according to any one of claims 10 to 12, further comprising:
receiving capability indication information sent by at least one of an LMF and an AMF, wherein the capability indication information is configured to indicate whether the LMF supports a ranging or sidelink positioning capability; and
determining, according to the capability indication information, that an LMF that has the ranging or sidelink positioning capability is configured or an LMF that has the ranging or sidelink positioning capability is not configured.

14. An apparatus for determining an operation mode, configured in a User Equipment UE, comprising:
a transceiver module, configured to receive first indication information, wherein the first indication information is configured to indicate an operation mode, the operation mode is a mode for performing ranging or sidelink positioning, and the operation mode comprises at least one of: a UE-only mode or a network-based mode; and the transceiver module is further configured to receive a ranging or sidelink positioning request;
a processing module, configured to determine an operation mode according to at least one of the first indication information or the ranging or sidelink positioning request.

15. An apparatus for assisting in determining an operation mode, configured in a Policy Control Function PCF, comprising:
a transceiver module, configured to send first indication information to a User Equipment, wherein the first indication information is configured to indicate an operation mode, the operation mode is a mode for performing ranging or sidelink positioning, and the operation mode comprises at least one of: a UE-only mode, or a network-based mode.

16. An electronic device, comprising a processor and a memory, wherein
the memory is configured to store a computer program; and
the processor is configured to execute the computer program to implement the method according to any one of claims 1 to 9 or any one of claims 10 to 13.

17. A computer-readable storage medium, wherein the computer-readable storage medium stores instructions, and when the instructions are executed by a computer, the computer is caused to perform the method according to any one of claims 1 to 9 or any one of claims 10 to 13.
